# EUROPÄISCHE PATENTSCHRIFT

(11) **EP 0 867 313 B1**
(45) Veröffentlichungstag und Bekanntmachung des Hinweises auf die Patenterteilung: **08.05.2002**
(21) Anmeldenummer: 98102491.2
(22) Anmeldetag: 13.02.1998
(51) Int. Cl.: B60G 7/02, F16F 13/14

(54) **Hülsengummifeder mit hydraulischer Dämpfung**
Rubber-sleeved spring with hydraulic damping
Ressort à manchon élastomérique avec amortissement hydraulique

(30) Priorität: 27.03.1997 DE 19713003
(43) Veröffentlichungstag der Anmeldung: 30.09.1998
(73) Patentinhaber: ZF Lemförder Metallwaren AG, 49448 Lemförde (DE)
(72) Erfinder: Meyerink, Frank, 49393 Lohne (DE); Kramer, Klaus, 49434 Neuenkirchen (DE); Vossel, Andreas, 49086 Osnabrück (DE); Jördens, Ernst-Günter, 49401 Damme (DE)

(56) Entgegenhaltungen:
- EP-A- 0 410 397
- EP-A- 0 482 296
- EP-A- 0 718 524
- FR-A- 2 727 179
- JP-A- 7 269 634
- US-A- 4 789 144
- US-A- 5 190 269
- US-A- 5 277 410
- PATENT ABSTRACTS OF JAPAN vol. 1997, no. 07, 31. Juli 1997 (1997-07-31) & JP 09 068253 A (KINUGAWA RUBBER IND CO LTD), 11. März 1997 (1997-03-11)

## Beschreibung

Die Erfindung betrifft eine Hülsengummifeder mit hydraulischer Dämpfung. Eine solche Hülsengummifeder gemäß dem Oberbegriff des Anspruchs 1 wird in US-A-4 789 144 offenbart.

Hydraulisch dämpfende Lagerungen sind zur Schwingungsreduzierung im Automobilbau bekannt. Je nach spezifischem Einsatzfall unterscheiden sich jedoch die zu erfüllenden Dämfungscharakteristiken. Hülsengummifedern mit hydraulischer Dämfung werden für eine Dämfüng in axialer oder in radialer Richtung ausgelegt. Um beide Schwingungsrichtungen abfedern zu können, müssen daher zwei separate Bauteile verwendet werden.

Es ist das technische Problem der Erfindung, eine Hülsengummifeder mit hydraulischer Dämfüng zu schaffen, die eine Dämpfung auftretender Fahrzeugschwingungen sowohl in axialer als auch in radialer Richtung ermöglicht.

Hierfür wird eine einteilig ausgeführte Hülsengummifeder mit hydraulischer Dämpfung für Lagerungen in Kraftfahrzeugen vorgeschlagen. Diese besteht aus einer inneren Lagerhülse, einer diese mit radialem Abstand umgebenden äußeren Lagerhülse, einem zwischen beiden Lagerhülsen angeordneten Elastomerkörper, der wenigstens eine, mit hydraulischem Dämpfungsmittel gefüllte erste Kammer bildet. Als Material für den oder die Elastomerkörper der Hülsengummifeder kann beispielsweise Gummi verwendet werden. Dieser ist in verschiedenen Härtegraden einsetzbar, sodaß auch hierdurch unterschiedliche Dämfungscharakteristiken erzielt werden können. Selbstverständlich sind auch Kunststoffe anwendbar. Der Elastomerkörper kann zudem mit Einlagen aus Metall und / oder Kunststoff verstärkt werden.

Eine Kanalplatte, die einen die Kammern verbindenden Drosselkanal enthält, trennt die erste Kammer von einer zweiten Kammer, die sich innerhalb einer die Hülsengummifeder dichtend verschließenden Kappe befindet.

Die äußere Lagerhülse weist wenigstens zwei unterschiedliche Außendurchmesser auf, von denen der hauptsächlich radial belastete Bereich kleineren Durchmessers in ein Kraftfahrzeugbauteil eingesetzt wird. Der korrespondierende Bereich der inneren Lagerhülse ist mit wenigstens zwei über den Umfang verteilt angeordneten Anschlagpuffern versehen. Diese übernehmen die Dämpfung der Fahrzeugschwingungen in radialer Richtung und sind an dem Elastomerkörper angeformt.

Der Bereich des größeren Durchmessers enthält die durch die Kanalplatte getrennten, mit Dämpfungsmittel gefüllten Kammern, die hauptsächlich zur Dämpfung der in axialer Richtung in die Hülsengummifeder eingeleiteten Schwingungen dienen. Im Übergangsbereich zwischen kleinerem und größerem Durchmesser der Hülsengummifeder weist diese einen radial nach außen gerichteten Bund auf. Dieser Bund dient gleichermaßen als Anschlagbegrenzung für das die Hülsengummifeder aufnehmende Kraftfahrzeugbauteil beim Einbau in das Kraftfahrzeug. Der Bund sollte vorteilhafter Weise auf seiner dem Kraftfahrzeugbauteil zugewandten Seite mit einer Elastomerschicht überzogen sein.

Die Verlagerung der Dämpfungskammern in den Bereich des größeren Durchmessers hat den Vorteil, daß eine erfindungsgemäße Hülsengummifeder strömungstechnisch nahezu beliebig ausgelegt werden kann. Der Bereich des größeren Durchmessers wird erfindungsgemäß nicht in ein Kraftfahrzeugbauteil eingesetzt, sodaß der Gestaltung keine geometrischen Grenzen gesetzt sind, was bedeutet, daß der Außendurchmesser nahezu frei wählbar ist. Je nach gewünschter Dämpfüngscharakteristik kann somit auch der Querschnitt des Drosselkanals erweitert oder verringert werden. Es wird somit eine bedarfsgerecht ausführbare Hülsengummifeder mit variabler Volumen- beziehungsweise Beulsteifigkeit im Verhältnis zum Durchmesser des Drosselkanals erreicht.

Es liegt auch innerhalb des Erfindungsgedankens, eine im Bereich des größeren Durchmessers überdimensionierte Hülsengummifeder zu schaffen, in die dann bedarfsgerecht unterschiedliche Kanalplatten einsetzbar sind, die lediglich gleiche Außenabmessungen aufweisen, deren innerer Aufbau, das heiß, deren Drosselkanal jedoch für den Einzelfall strömungsoptimiert ist. Es wird somit ein Baukastensystem geschaffen.

Eine vorteilhafte Ausgestaltung der Erfindung ist Gegenstand des Unteranspruches. So kann die Kanalplatte einer erfindungsgemäßen Hülsengummifeder mehrteilig, insbesondere zweiteilig ausgeführt sein. Sie weist dann beispielsweise einen Trägerteil mit dem Drosselkanal sowie einen diesen verschließenden Deckel auf. Der Trägerteil kann einstückig mit einer Membran ausgeführt sein, deren radial innerer Bereich in eine komplementäre Aufnahme der inneren Lagerhülse dichtend eingesetzt wird. Diese Membran dämpft überwiegend Schwingungen kleiner Amplituden.

Die mehrteilige Ausführung der Kanalplatte hat den Vorteil, daß bei der Montage einer erfindungsgemäßen Hülsengummifeder Lufteinschlüsse vermieden werden können, die die Dämpfungscharakteristik ungewollt beeinflussen würden. Derartige Bauteile werden bekanntermaßen in einem Bad der Dämpfungsflüssigkeit montiert. Bei einteiliger Drosselkanalausführung bestünde mithin die Gefahr, daß Luftblasen in dem Kanal verbleiben und somit bei der Montage in der Hülsengummifeder eingeschlossen werden. Außerdem ist es vorteilhaft, die Membran an dem Trägerteil durch ein Vulkanisierungsverfahren anzubringen. Durch die mehrteilige Ausführung einer erfindungsgemäßen Kanalplatte kann während die Membran anvulkanisiert wird, das Eindringen von Elastomermaterial in den Drosselkanal verhindert werden. Eine Herstellung in dieser Weise bringt somit Bauteile hervor, die höchsten Qualitätsanforderungen entsprechen.

Ein Ausführungsbeispiel der Erfindung wird nachstehend unter Bezugnahme auf die Zeichnung näher erläutert. Es zeigt:

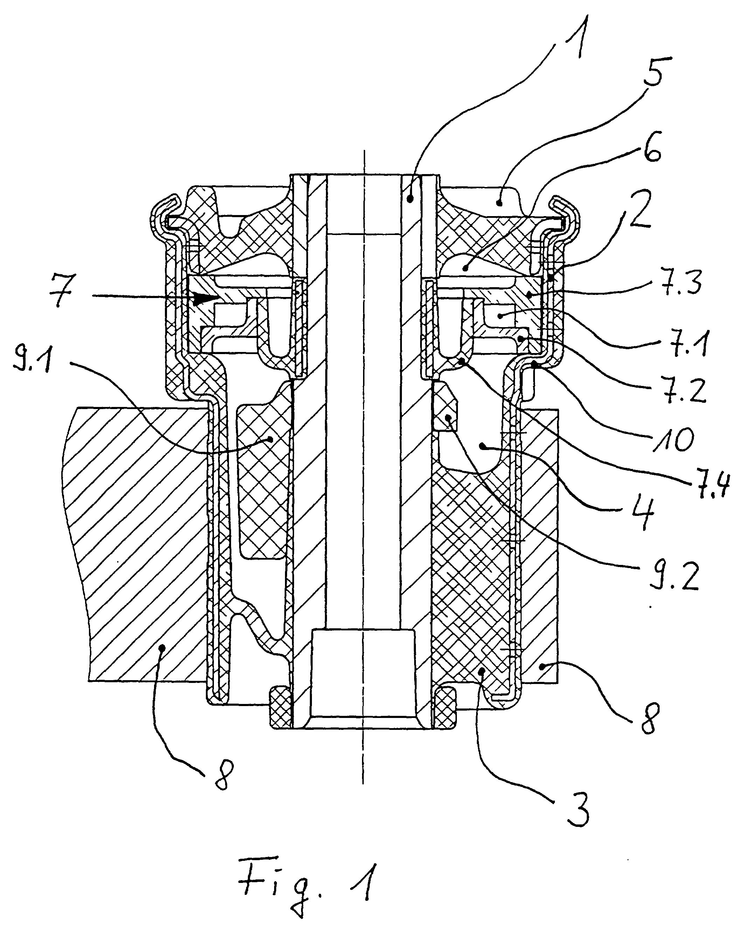

**Figur 1:** einen Schnitt durch eine erfindungsgemäße Hülsengummifeder.

In der Figur 1 ist beispielhaft eine mögliche Ausführungsform einer erfindungsgemäßen Hülsengummifeder im Schnitt dargestellt.

Eine derartige einteilig ausgeführte Hülsengummifeder mit hydraulischer Dämpfung für Lagerungen in Kraftfahrzeugen besteht aus einer inneren Lagerhülse (1), einer diese mit radialem Abstand umgebenden äußeren Lagerhülse (2), einem zwischen beiden Lagerhülsen angeordneten Elastomerkörper (3), der eine, mit hydraulischem Dämpfungsmittel gefüllte erste Kammer (4) aufweist.

Als Material für den Elastomerkörper (3) der Hülsengummifeder wird vorliegend Gummi verwendet. Dieser ist in verschiedenen Härtegraden einsetzbar, sodaß auch hierdurch unterschiedliche Dämfungscharakteristiken erzielt werden können.

Eine Kanalplatte (7) trennt die erste Kammer (4) von einer zweiten Kammer (6), die sich innerhalb einer die Hülsengummifeder dichtend verschließenden Kappe (5) befindet. Die Kanalplatte (7) enthält einen die Kammern (4 und 6) verbindenden Drosselkanal (7.1).

Die äußere Lagerhülse (2) weist zwei unterschiedliche Außendurchmesser auf, von denen der hauptsächlich radial belastete Bereich kleineren Durchmessers in das Kraftfahrzeugbauteil (8) eingesetzt ist. Der korrespondierende Bereich der inneren Lagerhülse (1) ist mit zwei über den Umfang verteilt angeordneten Anschlagpuffern (9.1 und 9.2) versehen. Diese übernehmen die Dämpfung der Fahrzeugschwingungen in radialer Richtung und sind an dem Elastomerkörper (3) angeformt.

Der Bereich des größeren Durchmessers enthält die durch die Kanalplatte (7) getrennten, mit Dämpfungsmittel gefüllten Kammern (4, 6), die hauptsächlich zur Dämpfung der in axialer Richtung in die Hülsengummifeder eingeleiteten Schwingungen dienen.

Im Übergangsbereich zwischen kleinerem und größerem Durchmesser der Hülsengummifeder weist diese einen radial nach außen gerichteten Bund (10) auf. Dieser Bund dient gleichermaßen als Anschlagbegrenzung für das die Hülsengummifeder aufnehmende Kraftfahrzeugbauteil (8) beim Einbau in das Kraftfahrzeug. Der Bund (10) ist auf seiner dem Kraftfahrzeugbauteil (8) zugewandten Seite mit einer Elastomerschicht überzogen.

Die Kanalplatte (7) einer erfindungsgemäßen Hülsengummifeder ist zweiteilig ausgeführt. Sie weist einen Trägerteil (7.2) mit dem Drosselkanal (7.1) sowie einen diesen verschließenden Deckel (7.3) auf. Der Trägerteil (7.2) ist einstückig mit einer Membran (7.4) ausgeführt, deren radial innerer Bereich in eine komplementäre Aufnahme der inneren Lagerhülse (1) dichtend eingesetzt ist. Die Membran (7.4) dämpft überwiegend Schwingungen kleiner Amplituden.

Membran (7.4) und Trägerteil (7.2) sind durch ein Vulkanisierungsverfahren unlösbar verbunden.

### Bezugszeichenliste:

- 1: innere Lagerhülse
- 2: äußere Lagerhülse
- 3: Elastomerkörper
- 4: erste Kammer
- 5: Kappe
- 6: zweite Kammer
- 7: Kanalplatte
- 7.1: Drosselkanal
- 7.2: Trägerteil
- 7.3: Deckel
- 7.4: Membran
- 8: Kraftfahrzeugbauteil
- 9.1: Anschlagpuffer
- 9.2: Anschlagpuffer
- 10: Bund

## Patentansprüche

1. Hülsengummifeder mit hydraulischer Dämpfung für Lagerungen in Kraftfahrzeugen, bestehend aus:
- einer inneren Lagerhülse (1),
- einer diese mit radialem Abstand umgebenden äußeren Lagerhülse (2),
- einem zwischen beiden Lagerhülsen an wenigstens einer festhaftend angeordneten Elastomerkörper (3), der wenigstens eine, mit hydraulischem Dämpfungsmittel gefüllte Kammer (4) bildet,
- einer Kappe (5), die die Hülsengummifeder unter Bildung einer zweiten Kammer (6) dichtend verschließt,
- einer Kanalplatte (7), die einen die Kammern (4 und 6) verbindenden Drosselkanal (7.1) enthält,
**dadurch gekennzeichnet, daß** die äußere Lagerhülse (2) wenigstens zwei unterschiedliche Außendurchmesser aufweist, von denen der hauptsächlich radial belastete Bereich kleineren Durchmessers in ein Kraftfahrzeugbauteil (8) eingesetzt wird, auf dem korrespondierenden Bereich der inneren Lagerhülse (1) wenigstens zwei über den Umfang verteilt angeordnete Anschlagpuffer (9) vorgesehen sind und der Bereich größeren Durchmessers die durch die Kanalplatte (7) getrennten, mit Dämpfungsmittel gefüllten Kammern (4,6) enthält.

2. Hülsengummifeder mit hydraulischer Dämpfung nach Anspruch 1,
**dadurch gekennzeichnet, daß**
die zweiteilige Kanalplatte (7) einen Trägerteil (7.2) mit dem Drosselkanal (7.1) sowie einen diesen verschließenden Deckel (7.3) aufweist und der Trägerteil (7.2) einstückig mit einer Membran (7.4) ausgeführt ist, deren radial innerer Bereich in eine komplementäre Aufnahme der inneren Lagerhülse (1) dichtend eingesetzt ist.

## Claims

1. Rubber-sleeved spring with hydraulic damping for mounting arrangements in motor vehicles,
consisting of:
- an inner bearing sleeve (1),
- an outer bearing sleeve (2), which surrounds the latter at a radial spacing,
- an elastomer body (3), which is disposed between the two bearing sleeves so as to adhere to at least one and which forms at least one chamber (4) filled with hydraulic damping medium,
- a cap (5), which seals the rubber-sleeved spring while forming a second chamber (6),
- a channel plate (7), which contains a throttle channel (7.1) connecting the chambers (4 and 6),
**characterised in that** the outer bearing sleeve (2) has at least two different outside diameters, of which the predominantly radially loaded region of a smaller diameter is inserted in a motor vehicle component (8), at least two stop buffers (9) are provided on the corresponding region of the inner bearing sleeve (1), these being distributed over the circumference, and the region of a greater diameter contains the chambers (4, 6) separated by the channel plate (7) and filled with damping medium.

2. Rubber-sleeved spring with hydraulic damping according to Claim 1,
**characterised in that**
the two-part channel plate (7) comprises a carrier part (7.2) with the throttle channel (7.1) as well as a cover (7.3) closing the latter, and the carrier part (7.2) is integral with a diaphragm (7.4), the radially inner region of which is inserted in a sealing fashion in a complementary receptacle of the inner bearing sleeve (1).

## Revendications

1. Ressort caoutchouc à mandrins avec amortissement hydraulique destiné à des suspensions de véhicule automobile, constitué de :
- un mandrin de support (1) intérieur,
- un mandrin de support (2) extérieur entourant celui-ci à distance radiale,
- un corps en élastomère (3) disposé entre les deux mandrins de support, de manière à adhérer à au moins l'un de ceux-ci, qui forme au moins une chambre (4) remplie d'un fluide d'amortissement hydraulique,
- un capuchon (5) qui ferme de manière étanche le ressort en caoutchouc à mandrins en formant une deuxième chambre (6),
- une plaque à canal (7) qui contient un canal d'étranglement (7.1) qui relie les chambres (4 et 6),
**caractérisé en ce que** le mandrin de support (2) extérieur présente au moins deux diamètres extérieurs différents dont la zone de petit diamètre, principalement sollicitée radialement, est insérée dans un composant (8) du véhicule automobile, sur la zone correspondante du mandrin de support (1) intérieur sont prévus au moins deux tampons de butée (9) répartis sur le pourtour, et la zone de grand diamètre contient les chambres (4, 6) remplies de fluide d'amortissement, séparées de la plaque à canal (7).

2. Ressort caoutchouc à mandrins avec amortissement hydraulique selon la revendication 1, **caractérisé en ce que** la plaque à canal (7) en deux parties comporte un élément porteur (7.2) avec le canal d'étranglement (7.1) ainsi qu'un couvercle (7.3) fermant celui-ci, et l'élément porteur (7.2) est réalisé d'un seul tenant avec une membrane (7.4) dont la zone intérieure radialement est insérée, de manière étanche, dans un logement complémentaire du mandrin de support (1) intérieur.
